(19) Europäisches Patentamt

European Patent Office

Office européen des brevets

(11) Publication number: 0 262 894 B1

(12) EUROPEAN PATENT SPECIFICATION

(45) Date of publication of patent specification: **18.03.92**    (51) Int. Cl.⁵: **C01B 3/56**, C01B 31/20

(21) Application number: **87308554.2**

(22) Date of filing: **28.09.87**

(54) **For the co-production of carbon dioxide and hydrogen.**

(30) Priority: **01.10.86 US 914098**

(43) Date of publication of application:
**06.04.88 Bulletin 88/14**

(45) Publication of the grant of the patent:
**18.03.92 Bulletin 92/12**

(84) Designated Contracting States:
**DE ES FR GB NL**

(56) References cited:
**EP-A- 0 195 200**
**DE-A- 2 930 523**

(73) Proprietor: **The BOC Group, Inc.**
**85 Chestnut Ridge Road**
**Montvale, New Jersey 07645(US)**

(72) Inventor: **Lerner, Steven L.**
**41 Holly Glen Lane South**
**Berkeley Heights NJ 07922(US)**
Inventor: **MacLean, Donald L.**
**RD2 Box 102**
**Annandale N.J. 08801(US)**
Inventor: **Malik, Virginia A.**
**1633 Lenape Road**
**Linden N.J. 07036(US)**

(74) Representative: **Wickham, Michael et al**
**c/o Patent and Trademark Department The**
**BOC Group plc Chertsey Road**
**Windlesham Surrey GU20 6HJ(GB)**

## Description

This invention relates to the co-production of enriched streams of separate carbon dioxide and hydrogen products from for example the effluent of a methane steam reformer. In particular, a pressure swing adsorption (PSA) unit is employed to separate the effluent from a methane steam reformer into a primary stream of enriched hydrogen. The purge gas from the $H_2$ PSA unit is combusted to yield carbon dioxide and to produce valuable energy in the form of electricity which can be employed to liquify a portion of the enriched hydrogen stream and carbon dioxide combustion product.

Methane steam reformers are widely used in the petroleum and chemical process industries. Methane and water react to produce hydrogen and carbon monoxide by a well known chemical reaction. The hydrogen rich effluent from the methane steam reformer may be used for various purposes, for example, the reforming of hydrocarbons, the upgrading of oils and fuels, hydrogenation in the manufacture of specialty chemicals, or the production of ammonia. In general, the hydrogen rich effluent of the methane steam reformer can be used to increase the hydrogen to carbon ratio of organic materials.

The effluent from the methane steam reformer, comprising carbon monoxide and hydrogen is reacted in a water-gas shift reactor with further steam to convert typically 80-95% of the carbon monoxide to carbon dioxide and hydrogen by a well known chemical reaction. A methane steam reformer is frequently used in association with a water-gas shift reactor and henceforth the term "methane steam reformer" will be used to encompass both the reforming and water-gas shift units.

In order to produce the desired enriched hydrogen stream from the methane steam reformer effluent, it is known to use PSA to produce hydrogen by separating out the carbon dioxide, typically present at a concentration of 15-20 percent (by volume on a dry basis), in addition to removing the remaining carbon monoxide and methane. The hydrogen PSA concomitantly produces a purge gas typically comprising about 40% carbon dioxide, 11% carbon monoxide, 13% methane and about 36% hydrogen. The high carbon dioxide concentration reduces the calorific value of this purge gas to less than 11.2 MJ m$^{-3}$ (300 Btu/SCF (standard cubic foot)). It is known to recycle this purge gas to the steam reformer to maintain fuel balance. We improve this known process by treating the purge gas to produce carbon dioxide. This can be done economically and advantageously such that electrical power for liquefying carbon dioxide and hydrogen is generated.

According to the present invention there is provided a method for producing carbon dioxide and hydrogen products, comprising:

(i) separating a gas mixture comprising hydrogen, carbon dioxide and hydrocarbon by pressure swing adsorption in at least one adsorbent bed, whereby a primary steam enriched in hydrogen is produced;

(ii) periodically purging said adsorbent bed; characterised by

(iii) passing the purge to a combustor, wherein the purge gas is burned in the presence of oxygen to yield essentially carbon dioxide and water, and recycling a part of the exhaust from the combustor to said combustor.

The invention also provides apparatus or plant for producing carbon dioxide and hydrogen products comprising:

(i) at least one adsorbent bed for separating a gas mixture comprising hydrogen, carbon dioxide and hydrocarbon by pressure swing adsorption; characterised by

(ii) a combustor for burning purge gas from said adsorbent bed in the presence of oxygen to yield essentially carbon dioxide and water; and

(iii) means for recycling a part of the exhaust from the combustor to said combustor.

Preferably, the effluent from a methane steam reformer is sent to a PSA unit where the carbon dioxide, carbon monoxide, methane and a portion of the hydrogen are separated out to produce a hydrogen rich primary product. The PSA purge gas is then combusted with oxygen or oxygen enriched gas to form a mixture of carbon dioxide and water. Water is condensed prior to supplying the carbon dioxide stream to a carbon dioxide plant. Little or no additional pre-treatment or purification is required. The carbon dioxide stream is an economical and advantageous source of carbon dioxide for commercial production of industrial or food grade liquid carbon dioxide.

The hydrogen PSA purge to support combustion in the presence of pure or enriched oxygen are combusted in an internal combustion engine, gas turbine or other combustion device (herein generally referred to as the combustor) that can be used to drive an electrical power generation device. The exhaust gas from the combustor is typically cooled, condensing the water vapor which is subsequently removed, and preferably a portion of the exhaust gas is recycled as feed to the combustor. The amount of gas that is recycled controls the maximum temperature achieved in the combustor and allows the use of standard combustor hardware that is designed to operate with methane and air feed.

Several advantages are derived from the use of a combustion step in our process. Combustion of the purge gas increases the amount of recoverable carbon dioxide by 26-60% compared with merely splitting the purge into separate carbon dioxide and fuel streams. The need to separate the $H_2$, $CH_4$, CO and $CO_2$ components is eliminated. Finally, the combustion equipment used in the present invention, such as an internal combustion engine driven electric power generator or gas turbine driven electric power generator, steam boiler, or the like can cogenerate electricity, steam, and/or mechanical energy.

The electrical power generated by the present process could be used by the operator on site or can be sold to other parties. Co-production of electricity significantly reduces the manufacturing cost of liquid carbon dioxide. In an alternate embodiment, the electrical power obtained from the combustion of the PSA vent gas can be used to liquify, in addition to carbon dioxide, the hydrogen primary product.

The method and apparatus according to the invention will now be described by way of example with reference to the accompanying drawings, in which :

FIG. 1 is a schematic diagram of a first embodiment of the present invention wherein the effluent from a methane steam reformer is used to co-produce liquid carbon dioxide and gaseous hydrogen; and

FIG. 2 is a schematic diagram of a second embodiment of the present invention wherein the effluent from a methane steam reformer is used to co-produce liquid carbon dioxide and liquid hydrogen.

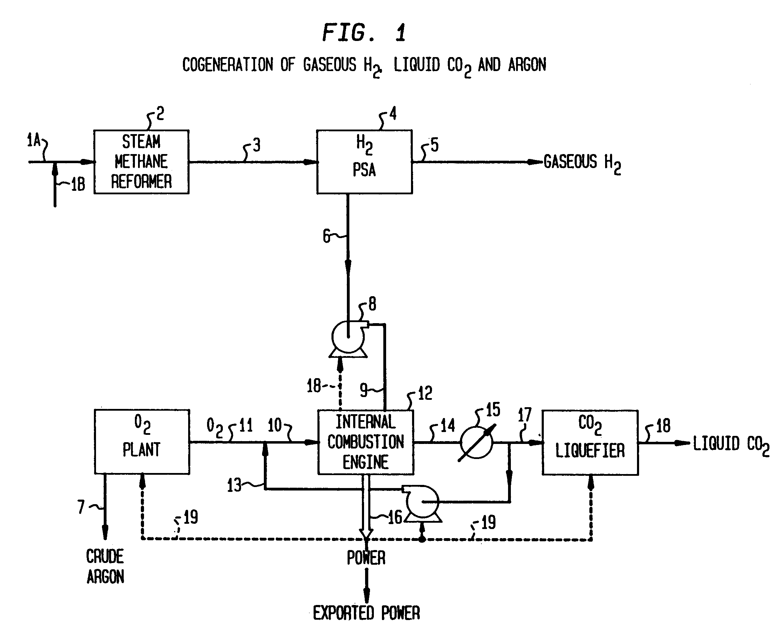

Referring to FIG. 1, a feed stream 1a is introduced into a methane steam reformer 2. The term "methane steam reformer" is herein used to encompass both reforming and water-gas shift units, although they are conventionally separate units. The feed stream 1a is typically a natural gas or a methane based feed, although heavier feeds such as liquefied petroleum gas (LPG) and naphtha are also suitable. Prior to entering the methane steam reformer 2, the feed stream 1a is compressed and then mixed with pressurised steam 1b. The feed stream is suitably compressed to approximately 3.20 MPa (450 psig) or typically 2.17 to 4.24 MPa (300-600 psig). The steam is suitably at a pressure of 10.4 MPa (1500 psig). The mixed feed is then passed through tubes in the reformer containing a Ni based catalyst. A one or two-step water gas shift reaction follows, thereby reducing the carbon monoxide concentration to below 2-3%. If one step, a high-temperature shift reactor is utilised. If two step, a high-temperature reactor is followed by a low-temperature shift reactor comprising a fixed bed of copper and zinc oxide catalyst.

Those familiar with the art of steam reforming will be knowledgeable regarding the particulars of the steam reformer operation. The following reactions are known to occur:

(1) $C_nH_m + {}_nH_2O = nCO + (n+m/2)H_2$

(2) $CO + 3H_2 = CH_4 + H_2O$

(3) $CO + H_2O = CO_2 + H_2$

The flue gas from the radiant section of the methane steam reformer and reaction products are cooled by heat integra- tion when being used for feed preheat of feed steam 1 and generation of steam for the process.

Cooled reaction products stream 3, still at high pressure, is separated in PSA unit 4 in order to yield a hydrogen rich stream 5 via pressure swing adsorption (PSA). The PSA unit 4 comprises adsorbers which are regenerated isothermally using a controlled sequence of depressurization and purging steps as is well known in the art. The PSA unit 4 may contain three to twelve adsorbers, the number depending on the size of the plant and yield required. The hydrogen rich stream 5 can obtain a purity of up to 99.999 volume percent hydrogen. The hydrogen is initially produced at about 2.07 kPa (300 psia), and typically 1.48 to 2.86 MPa (200 to 400 psig).

The PSA purge gas stream 6, which is vented at low pressure of less than 0.17 MPa (10 psig) (for example, under 136 kPa (5 psig)) is a mixture of carbon dioxide, hydrogen, methane, carbon dioxide and traces of water. This stream is then compressed in a compressor 8 to at least 0.27 MPa (25 psig) and typically to about 0.45 MPa to 0.51 MPa (50 to 60 psig). The compressed gas stream 9 is then sent to the fuel intake of an internal combustion engine 12. Entering the air intake of the internal combustion engine 12 is an admixture 10 of high oxygen concentration stream 11 and recycle stream 13, which is a recycled portion of the internal combustion engine exhaust gas and consists primarily of carbon dioxide. The ratio of the flow rates of streams 10 and 9 is controlled, with respect to stoichiometric, such that a slightly oxygen rich mixture is fed to the internal combustion engine. The ratio of the flow rates of streams 11 and 13 is controlled such that the peak temperature achieved by the engine is equal to or less than the peak temperature achieved when combusting a near stoichiometric ratio of methane and air for which the engine was designed.

The internal combustion engine 12 is typically a four cycle, spark ignition type engine with associated electrical generator and switch gear/transformer. Power is generated as indicated by line 16 in Fig. 1. Part of this power may be consumed by the feed compressor and recycle compressor and part is consumed by the oxygen and carbon dioxide plants, as indicated by dotted lines 18, and 19. There is a net production of power which is available for export.

The exhaust gas stream 14 from the internal combustion engine 12, which is primarily carbon dioxide and water vapor, is cooled in heat exchanger 15 to about 38°C (100°F) to condense out a substantial amount of the water combustion by-product.

Alternative options for cooling stream 14 include replacing the heat exchanger with a waste heat boiler in order to produce steam. This steam may be used to provide energy to an ammonia adsorption refrigeration unit which in turn could be used to provide refrigeration for the liquid carbon dioxide plant. Other options for effective use of the internal combustion engine exhaust heat would be evident to those skilled in the art.

The cooled gas stream is partially split into streams 17 and recycle stream 13. The amount of gas that comprises recycle stream 13, as mentioned previously, is selected such that the peak temperature in the internal combustion engine 12 is about the same as the peak temperature achieved when combusting the methane and air mixture for which these commercially available engines are designed. The stream 13 is fed to a compressor to increase the pressure such that it can be mixed with the oxygen rich stream 11. The resulting stream 10, as indicated above, is sent to the air intake of the internal combustion engine 12. The remaining portion of the cooled carbon dioxide stream is then sent to carbon dioxide liquefaction facilities to produce liquid carbon dioxide stream 18. In the event that an on-site oxygen plant is used to supply oxygen enriched stream 11, then a crude argon stream 7, requiring further purification, is co-produced as a valuable by-product.

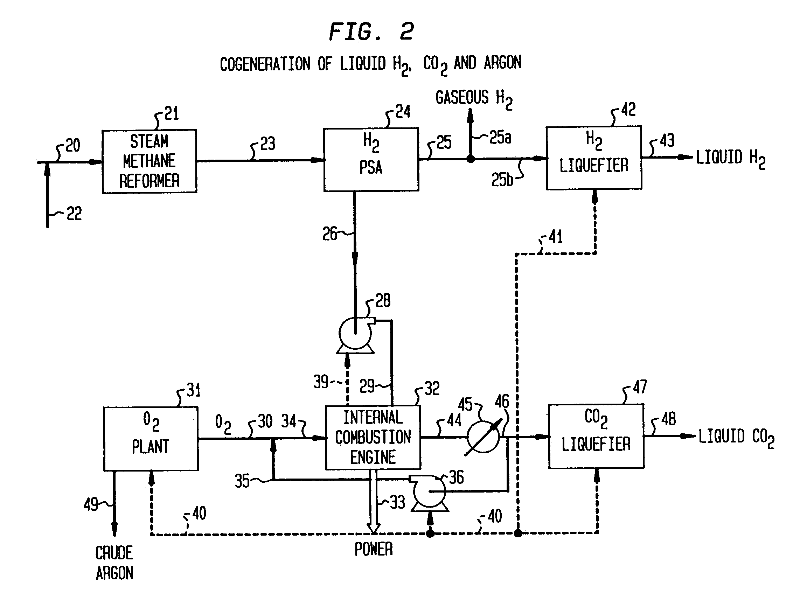

An alternate embodiment is shown in FIG. 2. A feed stream 20 is introduced into methane steam reformer 21. Prior to entering the methane steam reformer 21, the feed stream 20 is compressed and then mixed with pressurized steam entering via line 22. The feed stream is suitably compressed to approximately 3.20 MPa (450 psig) or typically 2.17 to 4.24 MPa (300-600 psig). The steam is suitable at a pressure of 10.4 MPa (1500 psig). The mixed feed is then passed through tubes in the reformer containing a Ni based catalyst.

Cooled reaction products stream 23, still at high pressure, is separated in PSA unit 24 in order to yield a hydrogen rich stream 25 via pressure swing adsorption (PSA). The PSA unit 24 comprises adsorbers which are regenerated isothermally using a controlled sequence of depressurization and purging steps as is well known in the art. The PSA unit 24 may contain three to twelve adsorbers, the number depending on the size of the plant.

The hydrogen rich stream 25 can obtain a purity of up to 99.999 volume percent hydrogen. The hydrogen is initially produced at 2.17 MPa (300 psig) and typically from 1.48 to 2.86 MPa (200 to 400 psig). This hydrogen is split into streams 25a and 25b. Stream 25a is gaseous and intended for conventional use as a primary product of the methane steam reformer. Stream 25b is excess capacity enriched hydrogen, which is subsequently liquified, as further explained below.

The PSA purge gas stream 26, which is vented at low pressure (for example, under 136 kPa (5 psig)) is a mixture of carbon dioxide, hydrogen, methane, carbon dioxide and traces of water. This stream is compressed in a compressor 28 to about 0.45 to 0.51 MPa (50 to 65 psig) to yield a compressed gas stream 29 prior to entering an internal combustion engine 32. Entering the air intake of the internal combustion engine 32 is an admixture 34 of a high oxygen concentration stream 30, and recycle stream 35, which is a recycled portion of the internal combustion engine exhaust gas and consists primarily of carbon dioxide. The ratio of the flow rates of streams 29 and 34 is controlled, with respect to stoichiometric, such that a slightly oxygen rich mixture is fed to the internal combustion engine. The ratio of the flow rates of streams 30 and 35 is controlled such that the peak temperature achieved by the engine is equal to or less than the peak temperature achieved when combusting the near stoichiometric ratio of methane and air for which the engine was designed. The recycle stream 35 is passed through a compressor 36 to increase the pressure such that it can be mixed with oxygen rich stream 30.

The internal combustion engine 32 is typically a four cycle, spark ignition type engine with associated electrical generator and switch gear/transformer. Power is generated as indicated by line 33 in Fig. 2. Part of this power may be consumed during feed compression and part is consumed by the oxygen and carbon dioxide plants, respectively as indicated by dotted lines 39 and 40 respectively. A portion of the power is utilized via line 41 to provide refrigeration for liquefier 42 of the hydrogen PSA product stream 25b, thereby yielding liquid hydrogen stream 43. A small portion of the power may be supplied to recycle compressor 36.

The exhaust gas stream 44 from the internal combustion engine 32, which is primarily carbon dioxide and water vapor, is cooled in heat exchanger 45 to about 100°F to condense out a substantial amount of the water combustion by-product. Waste heat recovery is optionally applicable for steam generation. The cooled exhaust gas stream is split into recycle stream 35, as indicated above, and non-recycle stream 46, which is sent to carbon dioxide liquefaction facilities 47 to produce liquid carbon dioxide stream 48.

An on-site oxygen plant 31, used to supply oxygen enriched stream 30 to the combustion means, produces crude argon stream 49 as a valuable by-product.

In the following example, unless otherwise indicated, parts are equal to 1b-moles per hour.

### EXAMPLE 1

A feed stream of commercially available natural gas consisting of 9105 parts of methane at a pressure of 3.20 MPa (450 psig) is introduced into a methane steam reformer. A stream of 18210 parts steam is also introduced into the methane steam reformer at a pressure of 10.4 MPa (1500 psig). The mixed feed is passed through the tubes of the reformer which contain conventional nickel catalyst to yield an effluent mixture comprising 1841 parts methane, 5722 parts carbon dioxide, 15441 parts carbon monoxide, 204493 parts hydrogen, and 42 parts water. This effluent mixture, which is at a temperature of 38°C (100°F) and a pressure of 2.17 MPa (300 psig), is then passed to a pressure swing adsorption system which produces as a primary product 15370 parts hydrogen at a temperature of 38°C (100°F) and a pressure of 2.00 MPa (275 psig). Periodically the pressure swing adsorption unit is purged to obtain a purge gas comprising 1841 parts methane, 5722 parts carbon dioxide, 1541 parts carbon monoxide, 5123 parts hydrogen, and 42 parts water at a temperature of 21°C (70°F) and a relatively low pressure of 136 kPa (5 psig). Prior to introducing the purge gas into a internal combustion engine this purge gas is compressed to 0.45 MPa (50 psig). Also introduced into the internal combustion engine is 7014 parts oxygen and 12931 parts of exhaust gas recycle. The oxygen is produced by an on-site oxygen plant which also produces a valuable side product of 300 parts crude argon. The combustion reaction which takes place converts the methane, carbon monoxide and hydrogen in the purge gas to carbon dioxide and water, thereby yielding 22036 parts carbon dioxide and 8805 parts water at an elevated temperature of 510°C (950°F) and a relatively low pressure of about 115 kPa (2 psig). This carbon dioxide enriched combustion gas is then passed through a heat exchanger to reduce the temperature thereof to 38°C (100°F) and condense out all but 569 parts of water. The cooled stream is then split, with 12931 parts $CO_2$ recycled to the intake of the internal combustion engine and 9105 parts $CO_2$ is then introduced into a conventional carbon dioxide plant where it is compressed, dried and condensed to liquid carbon dioxide for use as industrial or food grade carbon dioxide. The carbon dioxide liquefier can typically have a 10% loss during liquefaction while producing 8194 parts of carbon dioxide. The liquefier is a commercially available cryogenic unit which can utilise the power produced by the internal combustion engine. The internal combustion engine is used to provide 6.42 megawatts of generated power which is consumed as follows:

|  | Megawatts |
| --- | --- |
| Feed Compressor | 0.5 |
| $O_2$ Plant | 1.64 |
| $CO_2$ Plant | 1.13 |
| Net Available for Export | 3.15 |

The parameters of the process streams are shown in Table I below, in which the stream numbers correspond to the process streams shown in the diagram in FIG. 1.

TABLE 1

GASEOUS HYDROGEN AND LIQUID CO2 PRODUCTION

| STREAM NO | 1a | 1b | 3 | 5 | 6 | 9 | 11 | 7 | 14 | 17 | 18 | 13 |
|---|---|---|---|---|---|---|---|---|---|---|---|---|
| (lb-mole/day) | | | | | | | | | | | | |
| CH4 | 9105.21 | | 1841.02 | | 1841.02 | 1841.02 | | | | | | |
| CO2 | | | 5722.87 | | 5722.87 | 5722.87 | | | 22036 | 9105.2 | 8194.7 | 12931 |
| CO | | | 1541.32 | | 1541.32 | 1541.32 | | | | | | |
| H2 | | | 20493.84 | 15370.38 | 5123.46 | 5123.46 | | | | | | |
| H2O | | 18210.42 | 42.81 | | 42.81 | 42.81 | | | 8805.5 | 569 | | |
| O2 | | | | | | | 7014.38 | | | | | |
| Ar | | | | | | | | 300.8 | | | | |
| Temp °C (°F) | 38 (100) | | 21-38 (70-100) | 38 (100) | 21-38 (70-100) | | | | 510 (950) | 38 (100) | | |
| Pressure MPa (psig) | 302.0 (450) | | 2.17 (300) | 2.0 (275) | 0.14 (5) | 0.45 (50) | 0.108-0.17 (1-10) | | 0.108-0.115 (1-2) | | 0.108-0.115 (1-2) | |

NOTES:

1) 10% loss during liquefaction.
2) 1 lb-mole = 0.45 mol

EXAMPLE 2

A feed stream of natural gas consisting of 9105 parts of methane is introduced into a steam reformer at a pressure of 3.20 MPa (450 psig). Also introduced into the methane steam reformer is 18210 parts steam at a temperature of 100°F and a pressure of 3.20 MPa (1500 psig). This mixed feed is passed through the tubes of the reformer containing conventional nickel based catalyst. The reaction product comprises 1841 parts methane, 5722 parts of carbon dioxide, 1541 parts carbon monoxide, 20493 parts hydrogen, 42 parts water at a pressure of 2.17 MPa (300 psig). This reaction mixture is introduced into a pressure swing adsorption system to yield 15370 parts of high purity gaseous hydrogen at a pressure of 2.00 MPa (275 psig). 6800 parts of this hydrogen product is introduced into a hydrogen liquefier. Periodically the pressure swing adsorption system is purged to yield a purge gas comprising 1841 parts methane, 5722 parts carbon dioxide, 1541 parts carbon monoxide, 5123 parts hydrogen, and 42 parts water at a relatively low pressure of 136 kPa (5 psig). This purge gas is compressed to 0.45 MPa (50 psig) before introducing the same into an internal combustion engine. Also introduced into the internal combustion engine is a mixture of an enriched oxygen stream and a recycled exhaust stream comprising 7014 parts oxygen and 12931 parts of $CO_2$. The exhaust gas stream from the internal combustion engine comprises 22036 parts of carbon dioxide and 8805 parts of water at an elevated temperature of 510°C (950°F) and at a pressure of 0.115 MPa (2 psig). The water vapor is condensed out in a heat exchanger to yield a product stream of 22036 parts $CO_2$ and 569 parts water at a temperature of 100°F and 0.108 MPa (1 psig). This water depleted carbon dioxide stream is then split, with 12931 parts $CO_2$ recycled to the intake of the internal combustion engine and 9105 parts $CO_2$ liquified in a carbon dioxide liquifier to yield 8194 parts of liquid carbon dioxide. The internal combustion engine is used to provide 6.42 megawatts of generated power which is consumed in the following manner:

|  | Megawatts |
|---|---|
| Feed Compressor | 0.5 |
| Oxygen Plant | 1.64 |
| Carbon Dioxide Plant | 1.13 |
| Hydrogen Liquifier | 3.15 |
| Total | 6.42 |

The parameters of the process streams are shown in Table II below in which the stream numbers correspond to the process streams in the diagram of FIG. 2.

**TABLE 2**

**LIQUID HYDROGEN AND LIQUID CARBON DIOXIDE PRODUCTION**

| STREAM NO | 20 | 22 | 23 | 25a | 25b | 26 | 29 | 49 | 30 | 44 | 46 | 48 | 35 |
|---|---|---|---|---|---|---|---|---|---|---|---|---|---|
| lb-mole/day | | | | | | | | | | | | | |
| CH4 | 9105.21 | 1841.02 | 1841.02 | | | 1841.02 | | | | | | | |
| CO2 | | | 5722.87 | | | 5722.87 | | | | 22036 | 9105.21 | 8194.7 | 12931 |
| CO | | | 1541.32 | | | 1541.31 | | | | | | | |
| H2 | | 18210.42 | 20493.84 | 8570.38 | 6800.0 | 5123.46 | | | | | | | |
| H2O | | | 42.81 | | | 42.81 | | | | 8805.5 | 569 | | |
| O2 | | | | | | | | | 7014.38 | | | | |
| Ar | | | | | | | | 300.8 | | | | | |
| Temp °C (°F) | 38 (100) | | | | | | | | | 510 (950) | 38 (100) | | |
| Pressure MPa (psia) | 3.20 (450) | | 2.17 (300) | 2.00 (275) | 2.00 (275) | 0.14 (5) | 0.45 (50) | | 0.108-0.17 (1-10) | 0.108-0.115 (1-2) | 0.108-0.115 (1-2) | | |

**NOTES**

1) 10% loss during liquefaction

2) Stream 25 and 43 consist of 15370 and 6800 lb-mole/day of hydrogen, respectively

3) 1 lb-mole = 0.45 mol

## Claims

1. A method for producing carbon dioxide and hydrogen products, comprising:

(i) separating a gas mixture comprising hydrogen, carbon dioxide and hydrocarbon by pressure swing adsorption in at least one adsorbent bed, whereby a primary steam enriched in hydrogen is produced;

(ii) periodically purging said adsorbent bed; characterised by

(iii) passing the purge to a combustor, wherein the purge gas is burned in the presence of oxygen to yield essentially carbon dioxide and water, and recycling a part of the exhaust from the combustor to said combustor.

2. A method as claimed in claim 1, wherein said gas mixture is the effluent from a methane steam reformer.

3. A method as claimed in claim 1 or claim 2, additionally including liquefying the hydrogen.

4. A method as claimed in any one of the preceding claims additionally including condensing or otherwise removing the water vapour from the carbon dioxide and then liquefying the carbon dioxide.

5. A method as claimed in claim 4, in which heat generated by the combustor is employed to raise steam.

6. A method as claimed in claim 5, in which said steam is employed to provide energy to an ammonia absorption refrigerator that provides refrigeration to liquefy the carbon dioxide.

7. A method as claimed in any one of the preceding claims, in which the oxygen is supplied to the combustor in approximately stoichiometric proportions to the combustible constituents of the purge gas.

8. A method as claimed in any one of the preceding claims, in which the purge gas is compressed to at least 0.27 MPa (25 psig) prior to combustion.

9. A method as claimed in claim 8, in which the PSA purge gas is vented from said adsorbent bed at a pressure of less than 0.17 MPa (10 psig).

10. A method as claimed in any one of the preceding claims, wherein the combustor is used to drive an electric power generator.

11. A method as claimed in claim 10, wherein a portion of the electric energy produced by said generator is consumed in one or more of an oxygen plant for supplying oxygen to the combustor, a plant for liquefying the hydrogen, a plant for liquefying the carbon dioxide, and a compressor for compressing the purge gas.

12. Apparatus or plant for producing carbon dioxide and hydrogen products comprising:
(i) at least one adsorbent bed for separating a gas mixture comprising hydrogen, carbon dioxide and hydrocarbon by pressure swing adsorption; characterised by
(ii) a combustor for burning purge gas from said adsorbent bed in the presence of oxygen to yield essentially carbon dioxide and water; and
(iii) means for recycling a part of the exhaust from the combustor to said combustor.

**Revendications**

1. Procédé pour produire du bioxyde de carbone et de l'hydrogène, ce procédé comprenant :
(i) la séparation des constituants d'un mélange gazeux, comprenant de l'hydrogène, du bioxyde de carbone et de l'hydrocarbure, par adsorption avec variation cyclique de la pression dans au moins un lit d'adsorbant, ce qui permet de produire un courant primaire enrichi en hydrogène ;
(ii) la purge périodique dudit lit d'adsorbant, procédé caractérisé en ce que :
(iii) on fait passer la purge dans un appareil de combustion, dans lequel le gaz de purge est brûlé en présence d'oxygène, ce qui donne essentiellement du bioxyde de carbone et de l'eau, et l'on recycle vers cet appareil de combustion une partie du gaz d'échappement provenant de l'appareil de combustion.

2. Procédé tel que revendiqué à la revendication 1, dans lequel ledit mélange gazeux est l'effluent provenant d'un reformeur de méthane à la vapeur d'eau.

3. Procédé tel que revendiqué à la revendication 1 ou à la revendication 2, comprenant en outre la liquéfaction de l'hydrogène.

**4.** Procédé tel que revendiqué dans l'une quelconque des revendications précédentes, comprenant en outre la condensation ou l'enlèvement, d'une autre façon, de la vapeur d'eau du bioxyde de carbone puis la liquéfaction du bioxyde de carbone.

**5.** Procédé tel que revendiqué à la revendication 4, dans lequel la chaleur engendrée par l'appareil de combustion sert à former de la vapeur d'eau.

**6.** Procédé tel que revendiqué à la revendication 5, dans lequel ladite vapeur d'eau sert à fournir de l'énergie à un réfrigérateur, fonctionnant par absorption d'ammoniac, qui fournit de la réfrigération afin de liquéfier le bioxyde de carbone.

**7.** Procédé tel que revendiqué dans l'une quelconque des revendications précédentes, dans lequel l'oxygène est fourni, à l'appareil de combustion, en des proportions approximativement stoechiométriques des constituants combustibles du gaz de purge.

**8.** Procédé tel que revendiqué dans l'une quelconque des revendications précédentes, dans lequel le gaz de purge est comprimé jusqu'à une pression manométrique d'au moins 0,27 MPa (25 livres par pouce carré au manomètre) avant la combustion.

**9.** Procédé tel que revendiqué à la revendication 8, dans lequel le gaz de purge de l'unité d'adsorption avec variation cyclique de la pression est dégagé dudit lit adsorbant, à une pression manométrique inférieure à 0,17 MPa (10 livres par pouce carré au manomètre) pour partir par un évent à l'atmosphère.

**10.** Procédé tel que revendiqué dans l'une quelconque des revendications précédentes, dans lequel l'appareil de combustion sert à entraîner un générateur d'énergie électrique.

**11.** Procédé tel que revendiqué à la revendication 10, dans lequel une partie de l'énergie électrique produite par ledit générateur est consommée dans une ou plusieurs des installations suivantes : une installation de production d'oxygène, destinée à fournir de l'oxygène à l'appareil de combustion, une installation de liquéfaction de l'hydrogène, une installation pour liquéfier le bioxyde de carbone, et un compresseur pour comprimer le gaz de purge.

**12.** Appareil ou installation pour produire du bioxyde de carbone et de l'hydrogène, comprenant :
(i) au moins un lit adsorbant pour soumettre un mélange gazeux, comprenant de l'hydrogène, du bioxyde de carbone et de l'hydrocarbure, à une séparation de ses constituants, par adsorption avec variation cyclique de la pression, appareil ou installation caractérisé(e) par la présence :
(ii) d'un appareil de combustion pour brûler le gaz de purge provenant dudit lit adsorbant, en présence d'oxygène, pour donner essentiellement du bioxyde de carbone et de l'eau ; et
(iii) un moyen pour soumettre une partie du gaz d'échappement de l'appareil de combustion à un recyclage de réintroduction de cette partie dans ledit appareil de combustion.

## Patentansprüche

**1.** Verfahren zum Erzeugen von Kohlenstoffdioxid- und Wasserstoffprodukten, bei dem:
(i) ein Wasserstoff, Kohlenstoffdioxid und Kohlenwasserstoffe umfassendes Gasgemisch getrennt wird durch Druckschwing-Adsorption in mindestens einer Adsorbentenschicht, wodurch ein mit Wasserstoff angereicherter Primärstrom erzeugt wird;
(ii) die Adsorbentenschicht periodisch gespült wird; dadurch gekennzeichnet,
(iii) die Spülung einem Combustor zugeleitet wird, in dem das Spülungsgas in Anwesenheit von Sauerstoff verbrannt wird, um im wesentlichen Kohlenstoffdioxid und Wasser zu ergeben, und ein Teil des Abgases von dem Combustor zu dem Combustor zurückgeleitet wird.

**2.** Verfahren nach Anspruch 1, bei dem das Gasgemisch der Abfluß eines Methan-Dampfreformers ist.

**3.** Verfahren nach Anspruch 1 oder 2, das zusätzlich die Verflüssigung des Wasserstoffs enthält.

**4.** Verfahren nach einem der vorangehenden Ansprüche, das zusätzlich enthält, daß Wasserdampf kondensiert oder auf andere Weise von dem Kohlenstoffdioxid entfernt und dann das Kohlenstoffdioxid verflüssigt wird.

5. Verfahren nach Anspruch 4, bei dem die durch den Combustor erzeugte Wärme benutzt wird, um Dampf zu bilden.

6. Verfahren nach Anspruch 5, bei dem der Dampf benutzt wird, Energie für einen Ammoniak-Absorptionskühler zu schaffen, der Kühlung zum Verflüssigen des Kohlenstoffdioxids erzeugt.

7. Verfahren nach einem der vorangehenden Ansprüche, bei dem der Sauerstoff dem Combustor in annähernd stöchiometrischen Verhältniswerten zu den brennbaren Bestandteilen des Spülgases zugeführt wird.

8. Verfahren nach einem der vorangehenden Ansprüche, bei dem das Spülgas vor der Verbrennung auf mindestens 0,27 MPa (25 psig) komprimiert wird.

9. Verfahren nach Anspruch 8, bei dem das PSA-Spülgas von der Adsorbentenschicht bei einem Druck von weniger als 0,17 MPa (10 psig) abgelüftet wird.

10. Verfahren nach einem der vorangehenden Ansprüche, bei dem der Combustor zum Antrieb eines elektrischen Stromgenerators benutzt wird.

11. Verfahren nach Anspruch 10, bei dem ein Anteil der durch den Generator erzeugten elektrischen Energie in einer oder mehreren der nachfolgenden Anlagen verbraucht wird: einer Sauerstoffanlage zum Zuführen von Sauerstoff zu dem Combustor, einer Anlage zum Verflüssigen des Wasserstoffs, einer Anlage zum Verflüssigen des Kohlenstoffdioxids und einem Kompressor zum Komprimieren des Spülgases.

12. Vorrichtung oder Anlage zur Erzeugung von Kohlenstoffdioxid- und Wasserstoffprodukten, welche umfaßt:
(i) mindestens eine Adsorbentenschicht zum Trennen eines Wasserstoff, Kohlenstoffdioxid und Kohlenwasserstoffe umfassenden Gasgemischs durch Druckschwing-Adsorption; gekennzeichnet durch
(ii) einen Combustor zum Verbrennen von Spülgas von der Adsorbentenschicht in Anwesenheit von Sauerstoff, um im wesentlichen Kohlendioxid und Wasser zu erhalten; und
(iii) Mittel zum Rückführen eines Teils der Abgase von dem Combustor zu dem Combustor.

FIG. 1

COGENERATION OF GASEOUS H₂, LIQUID CO₂ AND ARGON

FIG. 2

COGENERATION OF LIQUID $H_2$, $CO_2$ AND ARGON

STEAM METHANE REFORMER ~21

20

22

23

$H_2$ PSA ~24

26

28 ~

39--
29

INTERNAL COMBUSTION ENGINE ~32

34
30 $O_2$

$O_2$ PLANT ~31

49
CRUDE ARGON

~40

35

33

36

~40

44 45
46

POWER

25
25a — GASEOUS $H_2$
25b

$H_2$ LIQUEFIER ~42

~41

43
LIQUID $H_2$

$CO_2$ LIQUEFIER ~47

48
LIQUID $CO_2$